# EUROPÄISCHE PATENTSCHRIFT

(11) **EP 3 191 258 B1**
(45) Veröffentlichungstag und Bekanntmachung des Hinweises auf die Patenterteilung: **12.12.2018**
(21) Anmeldenummer: 15763490.8
(22) Anmeldetag: 27.08.2015
(51) Int. Cl.: B24B 39/00, B24B 55/02, B23P 9/02, B23B 31/00

(54) **WERKZEUGSYSTEM UND WERKZEUGTRÄGER**
TOOL SYSTEM AND TOOL SUPPORT
SYSTÈME D'OUTILS ET PORTE-OUTILS

(30) Priorität: 12.09.2014 DE 102014013258
(43) Veröffentlichungstag der Anmeldung: 19.07.2017
(73) Patentinhaber: Baublies AG, 71272 Renningen (DE)
(72) Erfinder: KAPPEL, Thomas, 71263 Weil der Stadt (DE)
(74) Vertreter: Bartels und Partner, Patentanwälte
(86) Internationale Anmeldenummer: PCT/EP2015/001747
(87) Internationale Veröffentlichungsnummer: WO 2016/037690

(56) Entgegenhaltungen:
- DE-A1-102004 038 751
- DE-A1-102007 017 800
- DE-A1-102009 058 214
- US-A- 5 595 391

## Beschreibung

Die Erfindung betrifft ein Werkzeugsystem mit den Merkmalen im Oberbegriff von Anspruch 1.

Diamant-Glättwerkzeuge werden zum Glätten und Verfestigen von Werkstückoberflächen, die zumeist aus metallischen Werkstoffen hergestellt sind, verwendet. Dabei wird ein polierter Diamant mit einer definierten Kraft an die zu glättende Oberfläche angelegt und während einer Relativbewegung von Werkzeug und Werkstück wird das Oberflächenprofil spanlos umgeformt und insbesondere mikroskopisch betrachtet dabei eingeebnet. Neben einer Verbesserung der Rauheitsparameter der Werkstückoberfläche wird dabei der Eigenspannungszustand der Werkstückoberfläche verändert und zumindest oberflächennah am Werkstück eine Kaltverfestigung erreicht, so dass das Werkstück eine deutliche Verbesserung bezüglich dynamischer Belastbarkeit und Verschleißverhalten erfährt. Es kann sowohl eine Innenals auch eine Außenkontur des Werkstückes bedarfsweise glättend bearbeitet werden. Der Einsatz von Diamant-Glättwerkzeugen erfolgt dabei zumeist auf üblichen Metallbearbeitungsmaschinen, wie z.B. Dreh- oder Fräsmaschinen; kann aber auch auf Sondermaschinen erfolgen. Ein dahingehend vergleichbares Glättverfahren ist beispielhaft in der DE 10 2006 019 980 A1 aufgezeigt.

Das Glättelement besteht üblicherweise aus einem metallischen Werkzeugträger, an dem ein polierter Diamant, insbesondere durch ein Vakuum-Hartlötverfahren, befestigt ist. Die Form des Diamanten ist abschnittsweise sphärisch mit einem Radius von etwa 0,1 mm bis 15 mm ausgebildet. Es können aber auch andere, der Werkstückgeometrie sonst angepasste Formen verwendet werden, bspw. kegelförmig verlaufende Diamantwerkzeuge.

Der Diamant verschleißt während der angesprochenen Bearbeitung und muss deshalb in regelmäßigen Abständen ausgetauscht oder insbesondere am Träger verbleibend nachgearbeitet werden. Oft werden dabei die für eine Bearbeitung unbrauchbar gewordenen Diamanten für eine Mehrfachverwendung durch sogenanntes Nachschleifen instand gesetzt. Zum Austausch des Diamant-Glättwerkzeuges als Ganzes dient dabei regelmäßig eine definiert vorgegebene Schnittstelle zwischen Werkzeugträger und zuordenbarem Halter. Diese soll so beschaffen sein, dass der Wechsel des Halters rasch und unkompliziert von statten gehen kann. Weiterhin soll eine genaue Positionierung und ein sicherer Halt des Werkzeugträgers gegenüber dem Halter bzw. innerhalb dessen Träger-Aufnahme im späteren Betrieb gewährleistet sein.

Eine weit verbreitete Form der Schnittstellengestaltung des Werkzeugträgers besteht aus einem zylindrischen Grundkörper als dem Schaftteil desselben mit einer stirnseitig eingebrachten Gewindebohrung an dessen freiem Ende sowie einer kleinen, umlaufenden als Anlagefläche dienenden Schrägfläche an einem dem Gewinde des Schaftteils gegenüberliegenden Ende desselben, die regelmäßig am Übergang zum Aufnahmeteil mit dem Diamanten angeordnet ist. Die angesprochene Gewindebohrung dient im Übrigen dem Festlegen des Schaftteils des Werkzeugträgers am Halter mittels einer Schraubverbindung. Der Werkzeughalter selbst weist demgegenüber eine zylindrische Bohrung als Ausnehmung mit geringfügig größerem Innendurchmesser als dem Außendurchmesser des Werkzeugträgers im Bereich des einzubringenden Schaftteiles auf. Ferner ist die Ausnehmung des Werkzeughalters nach außen zur Umgebung mündend mit einer geneigten Haltefläche mit gleichem Neigungswinkel versehen, wie die Schräg- oder Anlagefläche des Werkzeugträgers, wobei sich sowohl die Haltefläche als auch die Anlagefläche in Richtung des freien Werkzeugträgerendes gesehen gleichermaßen konisch verjüngen.

Als nachteilig bei der dahingehend bekannten Schnittstelle wird angesehen, dass die zylindrische Bohrung im Halter im Durchmesser größer als der zylindrische Teil des Werkzeugträgers auszuführen ist, so dass selbst bei einer passgenauen Anlage systembedingt immer noch ein Spiel vorhanden ist, das eine präzise Lageorientierung der miteinander zu verbindenden Bauteile verhindert. Demgemäß erfolgt die möglichst präzis vorzunehmende Lagerorientierung des Werkzeugträgers am Halter lediglich über die geometrisch sehr klein gehaltene Schrägfläche des Werkzeugträgers und die zugeordnete Haltefläche im Bereich des freien Endes der als Bohrung ausgebildeten Ausnehmung des Halters.

Durch die klein dimensionierte Schrägflächenanordnung mit einem Neigungswinkel von etwa 45° sowohl gegenüber der Vertikalen als auch der Horizontalen und bezogen auf die normale, senkrecht verlaufende Einbaulage sowie die demgegenüber groß ausfallende, spielbehaftete Länge des ansonsten zylindrisch ausgebildeten Anlagesystems bestehen aufgrund der insoweit von den Lagerstellen her "überbestimmt" ausgeführten Schnittstellenanbindung eine Anfälligkeit für Schwingungen des Werkzeugträgers in dessen Betrieb, die sich auch auf den Halter der Bearbeitungsmaschine in nachteiliger Weise übertragen können. Diese systembedingt eingeleiteten Schwingungen sind insbesondere beim Glätten von Oberflächen im angestrebten Feinstbereich ausgesprochen schädlich. Des Weiteren sind die miteinander in Anlage befindlichen am Halter zur Umgebung hin vorstehenden Anlage- und Halteflächen am Werkzeugträger bzw. am Halter grundsätzlich empfindlich gegen mechanische Beschädigungen wie sie im rauen Alltagsbetrieb von außen her auftreten können, wobei bereits kleine Beschädigungen aufgrund der relativ klein gehaltenen Flächenübergänge eine große nachteilige Auswirkung auf das Anlageverhalten haben können, wodurch die Lageorientierung und die Stabilität des Werkzeugträgers in der Halteraufnahme noch weiter eingeschränkt werden.

Beim Nachschleifen wird nicht nur die Außenkontur des Diamanten unmittelbar bearbeitet, sondern systembedingt gleichzeitig mit auch die Außenkontur des angrenzenden Aufnahmeteils für diesen Diamanten. Mithin kommt es gleichzeitig und quasi automatisch durch das Abschleifen zu einer Verkleinerung des Aufnahmeteils, die wiederum zu einer Verkleinerung der an sich schon klein dimensionierten Anlagefläche am Übergang zwischen Schaft- und Aufnahmeteil führt. Es ist deshalb bereits aufgrund der vorgegebenen, geringen Materialstärke des Aufnahmeteils in diesem Anlagebereich nicht möglich, den Diamanten beliebig oft nachzuschleifen. Da der Diamant unter hohem Anlagedruck im Betrieb stehend mit Geschwindigkeiten von über 100 m/min über die Werkstückoberfläche gleitend geführt wird, entsteht Reibungswärme, welche zwingend aus dem Diamanten abgeführt werden muss, um eine Beschädigung desselben zu vermeiden und um die Qualität der Glättbearbeitung sicherstellen zu können. Bisher musste hierfür die dahingehend entstehende Wärme zum ganz überwiegenden Teil durch eine äußere Kühlschmiermittelzufuhr abgeführt werden, da über die kleine Kontaktfläche zwischen dem Diamant-Glättwerkzeug und dem Werkzeughalter nur eine sehr geringe Wärmeübergangsmöglichkeit in Richtung des Halters geschaffen ist.

Im Sinne einer "Legaldefinition" sei an dieser Stelle darauf hingewiesen, dass der Außenmantel eines symmetrisch aufgebauten Kegels an der Spitze desselben einen Öffnungswinkel begrenzt. Sofern die sich konisch verjüngende Anlagefläche und die jeweils korrespondierend konisch sich verjüngende Haltefläche des Halters jeweils einen Kegelstumpf ausbilden ergibt eine jeweils fiktiv durchgeführte Flächenverlängerung in Richtung der dann gleichfalls fiktiv anzunehmenden Kegelspitze in diesem Bereich den vorstehend genannten Öffnungswinkel und als halber Öffnungswinkel soll mithin derjenige Winkel bezeichnet sein, der zwischen der jeweils konisch verlaufenden Fläche respektive deren fiktiver Verlängerung und der Längsachse des in dem Halter aufgenommen Schaftteiles des Glätt-Werkzeuges verläuft.

Auch die DE 10 2004 038 751 A1, die US 5 595 391, die DE 10 2009 058 214 A1 und die DE 10 2007 01 7 800 A1 offenbaren Werkzeugsysteme.

Dies vorangestellt und ausgehend von dem vorstehend beschriebenen Stand der Technik liegt der Erfindung nunmehr die Aufgabe zugrunde, ein Werkzeugsystem und einen Werkzeugträger für ein solches System aufzuzeigen, die eine verbesserte Glättung und Verfestigung einer Oberfläche durch eine genaue Lageorientierung und hohe Lagestabilität des Werkzeugträgers in einem Haltersystem der Bearbeitungsmaschine ermöglichen, die weniger anfällig gegenüber möglichen Beschädigungen sind und die in verstärktem Maße gegenüber dem Stand der Technik ein mehrmaliges Nachschleifen des Werkzeuges im Bedarfsfall ermöglichen.

Diese Aufgabe wird durch ein Werkzeugsystem mit den Merkmalen des Patentanspruches 1 gelöst. Vorteilhafte Ausführungsformen des Werkzeugsystems gehen aus den Unteransprüchen 2 bis 11 hervor. Zur Lösung der genannten Aufgabe ist erfindungsgemäß nach dem kennzeichnenden Teil des Patentanspruches 1 vorgesehen, dass die jeweilige konische Anlagefläche respektive deren fiktive Verlängerung zu einer Längsachse des Schaftteiles einen halben Öffnungswinkel aufweist, der kleiner als 30° ist, vorzugsweise zwischen 7,5° und 15° liegt, und dass die konische Anlagefläche des Werkzeugträgers mit einem geringen Überstand in Richtung des Aufnahmeteils an der Haltefläche des Halters anliegt.

Durch den über die Passgenauigkeit hinausgehenden geringen Überstand wird eine Maximierung der tatsächlich wirksamen Anlagefläche des Werkzeugträgers an der Haltefläche der Ausnehmung des Halters erreicht. Je größer die dahingehende Anlagefläche ausgebildet ist, desto größer ist die Stabilität des Werkzeuges im Betrieb und damit die Güte der vom Werkzeug eingeebneten Oberfläche des Werkstücks. Durch die vom Einbauwinkel her "steil" gewählte Konizität von Anlagefläche des Schaftteils nebst der Haltefläche der Ausnehmung im Halter, im Wesentlichen über die gesamte Einbauhöhe des Schaftteils in der Halterausnehmung gesehen, ist darüber hinaus eine spielfreie Eingriffsmöglichkeit geschaffen und zwar unabhängig von der Genauigkeit der Längen-Einbaumaße der miteinander zu kombinierenden Bauteile, was bei dem bekannten zylindrisch konzipierten Träger-Halter-System offensichtlich nicht möglich ist. So ist durch die Konizität erreicht, dass immer passgenau und spielfrei der Werkzeugträger in Anlage mit der Aufnahme-Ausnehmung des Halters kommt und etwaige Ungenauigkeiten dergestalt ausgeglichen werden können.

Zumindest abschnittsweise ist das Schaftteil somit kegelstumpfförmig mit großer Steilheit ausgebildet, wobei der Öffnungswinkel derart gewählt ist, dass jedenfalls keine Selbsthemmung auftritt und somit auch bei einem etwaig auftretenden Schadensfall eine einfache Demontierbarkeit von Werkzeug und Halter gewährleistet ist. Durch die erfindungsgemäße Lösung ist die potentiell wirksame Anlagefläche des Werkzeugträgers am Halter deutlich vergrößert, so dass sich die Vorteile einer sehr guten Lageorientierung des Werkzeugträgers im Halter bei einer stark verbesserten Stabilität der Verbindung zwischen diesem Werkzeugträger und dem Halter sowie eine verminderte Schwingungsneigung des gesamten Werkzeugs im Glättbetrieb ergeben.

Die deutlich gegenüber den Lösungen im Stand der Technik vergrößert ausgebildete Anlagefläche am Werkzeugträger führt auch bei einer teilweisen mechanischen Beschädigung dazu, dass sie immer noch in weiten Teilen funktionsfähig bleibt und insoweit ist deren Störanfälligkeit deutlich reduziert. Insbesondere ist im Einbaufall die jeweilige Anlagefläche in der Halterausnehmung geschützt vor Beschädigungen aufgenommen, so dass die Gefahr von Beschädigungen deutlich gegenüber den bekannten Lösungen im Stand der Technik reduziert ist. Weiter kommt es zu einem verbesserten Wärmeübergang zwischen dem Werkzeugträger und dem Halter, über die insoweit vergrößert ausgeführten Anlage- bzw. Halteflächen. Darüber hinaus ist zwanglos die Möglichkeit eine Vielzahl von Nachschleifvorgängen am Diamant-Glättwerkzeug durchzuführen geschaffen, da eine größere Kontaktfläche zur Verfügung steht, wobei das Nachschleifen des Aufnahmeteils die Anlagefläche am Schaftteil nicht zwangsläufig derart verkleinert, dass sie zur Lagepositionierung des Werkzeuges im Halter wie im Stand der Technik aufzeigt nichts mehr Wesentliches beitragen kann. Schließlich ist ein vereinfachter Wechsel des Werkzeugträgers auch bei beengten Raumverhältnissen direkt an der Bearbeitungsmaschine möglich, da ohne größere Selbsthemmung der Werkzeugträger sich immer vom Halter leicht lösen lässt und im Austauschfall auch dort wieder ohne Weiteres eingesetzt werden kann.

Bevorzugt ist weiter vorgesehen, dass die Anlagefläche und die ihr zugeordnete Haltefläche denselben halben Öffnungswinkel aufweisen. Durch dieses Merkmal ist sichergestellt, dass die Anlagefläche an der Haltefläche über eine längere Wegstrecke für den spielfreien Längeneingriff vollflächig und stabil anliegt.

In der Längsachse des Schaftteils gesehen, sind mit Vorteil, mehrere hintereinander angeordnete Anlageflächen vorhanden. Durch diese voneinander separierten Anlageflächen ist zwar gegenüber einer einteiligen, durchgehend ausgebildeten Anlagefläche die Gesamtfläche gegenüber der Anlage mit dem Halter verkleinert; dennoch kann für eine Erhöhung der Lagestabilität und für eine Verringerung der Schwingungsanfälligkeit es von Vorteil sein, wenn an zwei unterschiedlichen Stellen, gegebenenfalls auch mit unterschiedlich ausgebildeten Konizitäten, Anlage- und zuordenbare Haltefläche in Anlage miteinander im Rahmen des Festlegevorganges kommen.

Vorteilhaft weist, in Richtung der Längsachse des Schaftteils gesehen, die zumindest eine Anlagefläche eine Länge auf, die mindestens 20 % der Gesamtlänge des Schaftteils entspricht. Somit ist sichergestellt, dass die Anlagefläche des Werkzeugträgers am Halter hinreichend groß dimensioniert ist, um die gestellten Anforderungen zu erfüllen. Die Länge der gemessenen Anlagefläche in ihrem geneigten Verlauf beträgt in der Praxis bevorzugt 3 mm bis 10 mm.

Im Werkzeugträger kann eine Kühlschmiermittelführung vorgesehen sein, die vorzugsweise durch einen, insbesondere radial, axial oder diagonal, im oder am Werkzeugträger verlaufenden zentralen Kühlkanal gebildet ist, der bevorzugt an einer Mündung im Aufnahmeteil endet. Bei mehreren Kühlkanälen können deren Austrittsmündungen gegenüber dem Werkzeug versetzt zueinander angeordnet sein. Durch die intern verlaufende Kühlschmiermittelführung wird Kühlschmiermittel gezielt zum Diamant-Glättwerkzeug bzw. zu der jeweils zu bearbeitenden Oberfläche des Werkstücks gebracht. Somit ist eine aktive Kühlschmiermittelversorgung innerhalb des Werkzeugträgers realisiert. Diese verbessert die Ableitung der Prozesswärme und kann insbesondere bei der Bearbeitung von Innenkonturverläufen mit naturgemäß schlechter Wärmeableitung nach außen und/oder bei hohen Bearbeitungskräften die Einsatzdauer des Diamant-Glättwerkzeuges erheblich verlängern.

Besonders vorteilhaft ist zwischen zwei benachbart zueinander angeordneten Anlageflächen eine Ringnut vorgesehen, in der eine Dämpfungseinrichtung angeordnet ist und/oder die Bestandteil der Kühlschmiermittelführung ist. Über die Ringnut kann Kühlschmiermittel dem Werkzeugträger platzsparend über den Halter gezielt zugeführt werden.

Die Dämpfungseinrichtung kann insbesondere durch ein ringförmiges Dämpfungselement, beispielsweise aus einem Elastomer oder einem Polymer, wie Polytetrafluorethylen (PTFE), gebildet sein. Durch die Anordnung des Dämpfungselements in der Ringnut können bei besonders kritischen Bearbeitungen die Schwingungen des Werkzeugträgers zusätzlich gedämpft werden.

Das Spannmittel kann ein in eine Stirnseite des Schaftteils in dessen Innengewinde eingreifender Schraubbolzen oder ein mit einem Außengewinde versehener Ring sein, der am Aufnahmeteil anliegt und in den Halter eingeschraubt ist. Durch die Schraubbefestigung kann der Werkzeugträger schnell und einfach ausgetauscht werden und dennoch eine sichere Befestigung des Werkzeugträgers am jeweiligen Halter erreicht werden.

Das Aufnahmeteil kann neben dem Schaftteil gleichfalls konisch verjüngt ausgebildet sein und vorzugsweise einen größeren halben Öffnungswinkel als die Anlagefläche des Schaftteils bilden. Insbesondere verjüngt sich jedoch entgegengesetzt zu dem Neigungsverlauf von Anlage- und Haltefläche das Aufnahmeteil sich in Richtung des von ihm aufgenommenen Diamanten. Diese spezielle, weniger steil geneigte Form des Aufnahmeteils erleichtert es, das Diamant-Werkzeug nachzuschleifen.

Vorteilhaft weist das Aufnahmeteil, insbesondere in einem aus dem Halter vorragenden Abschnitt, eine Kühlrippe oder eine Kühlausnehmung auf. Die Kühlrippe oder Kühlausnehmung vergrößert die Oberfläche des Aufnahmeteils und leistet so einen passiven Beitrag zur Kühlung des Werkzeugs als Ganzes durch Wärmeabgabe an die Umgebung.

Die Erfindung ist nachfolgend anhand von in den Figuren dargestellten Ausführungsbeispielen näher erläutert. Es zeigen:
- Fig. 1: eine Seitenansicht eines Werkzeugträgers nach dem Stand der Technik;
- Fig. 2 und 3: eine Stirnseitenansicht und einen Längsschnitt eines Werkzeugsystems nach dem Stand der Technik;
- Fig. 4 bis 6: eine Seitenansicht, einen Längsschnitt und eine perspektivische Ansicht einer ersten Ausführungsform des erfindungsgemäßen Werkzeugträgers;
- Fig. 7 bis 28: in verschiedenen Ansichten und ggfs. teilweise ausgeführten Schnittdarstellungen, weitere Ausführungsbeispiele der erfindungsgemäßen Lösung.

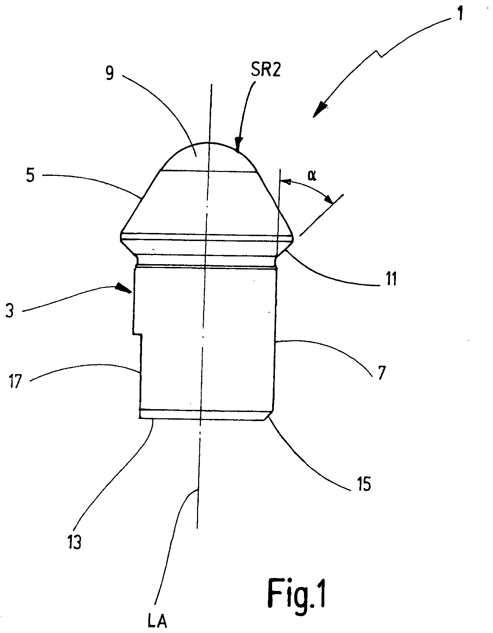

In den Fig. 1 bis 3 ist ein Werkzeugsystem 1 nach dem Stand der Technik dargestellt. Das Werkzeugsystem 1 weist einen Werkzeugträger 3 auf, der ein Aufnahmeteil 5 und ein Schaftteil 7 hat. Das Aufnahmeteil 5 ist zur Aufnahme eines Glättwerkzeuges 9, insbesondere in Form eines Diamant-Glättwerkzeuges vorgesehen. Das Diamant-Glättwerkzeug 9 ist auf seiner freiliegenden Oberseite sphärisch mit einem Radius SR2 geschliffen und der Diamant ist auf dem Aufnahmeteil 5 durch (Vakuum-) Hartlöten in üblicher und daher nicht mehr näher beschriebener Weise befestigt. Das Aufnahmeteil 5 ist in Richtung des Diamanten konisch zulaufend ausgeführt und geht in das Schaftteil 7 mittels einer sich demgegenüber gegenläufig konisch verjüngenden Anlagefläche 11 über. Die sich konisch verjüngende Anlagefläche 11 weist zur Längsachse LA des Schaftteils 7 einen Öffnungswinkel α von ca. 45° auf. Das Schaftteil 7 ist im Wesentlichen zylindrisch ausgeführt und an dem dem Aufnahmeteil 5 abgewandten Ende 13 mit einer Fase 15 versehen. Seitlich ist am Schaftteil 7 ein gegenüber der zylindrischen Mantelfläche rückspringender Absatz 17 vorgesehen, um ein erleichtertes Einsetzen des Werkzeugträgers 3 in den Halter 21 zu ermöglichen.

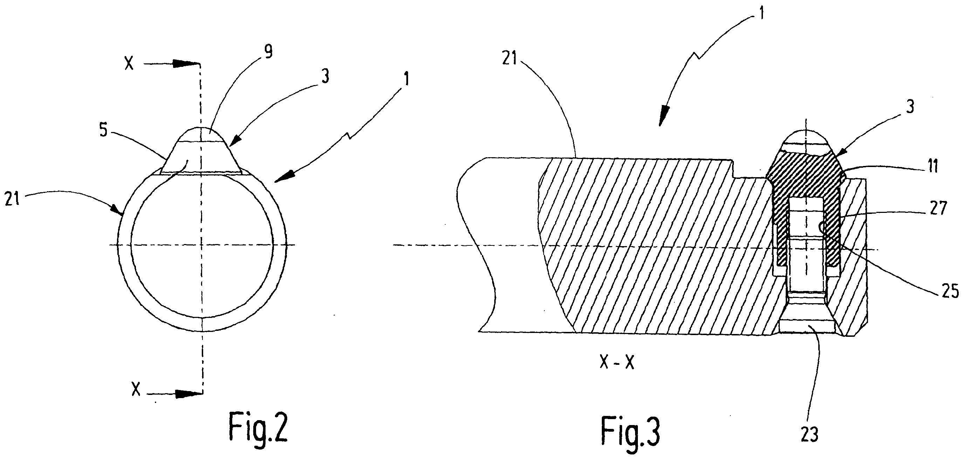

Die Fig. 2 und 3 zeigen den Werkzeugträger 3 insoweit in einem in den Halter 21 einer Bearbeitungsmaschine (nicht dargestellt) eingesetzten Zustand. Man erkennt, dass der Werkzeugträger 3 lediglich im Bereich seiner konisch verlaufenden Anlagefläche 11 insoweit an einer vergleichbar konisch verlaufenden und nach außen hin vorstehenden Haltefläche am Halter 21 anliegt und im Übrigen mit einer Schraube 23, die in ein Innengewinde 25 des Werkzeugträgers 3 an dessen freiem Ende stirnseitig eingreift, am Halter 21 in wieder lösbarer Weise fixiert ist. Die zylindrische (Mantel-) Fläche 27 des Werkzeugträgers 3 trägt derweil wegen der grundsätzlich spielbehafteten Anlage in der Ausnehmung des Halters 21 wenig bis gar nicht zu einer stabilisierten Lage des Werkzeugträgers 3 am Halter 21 während einer Glättbearbeitung bei.

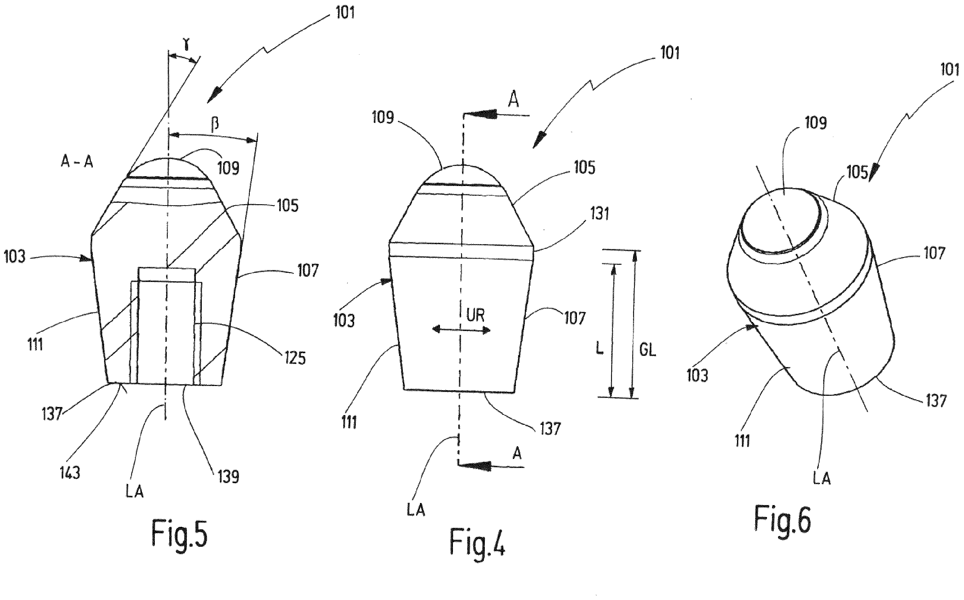

Die in den folgenden Figuren 4 bis 29 gezeigten erfindungsgemäßen Werkzeugsysteme 101, 201, 301, 401, 501, 601, 701 umfassen jeweils einen Werkzeugträger 103, 203, 303, 403, 503, 603, 703 zur Aufnahme eines Werkzeuges 109, insbesondere in Form des Diamant-Glättwerkzeuges 9.

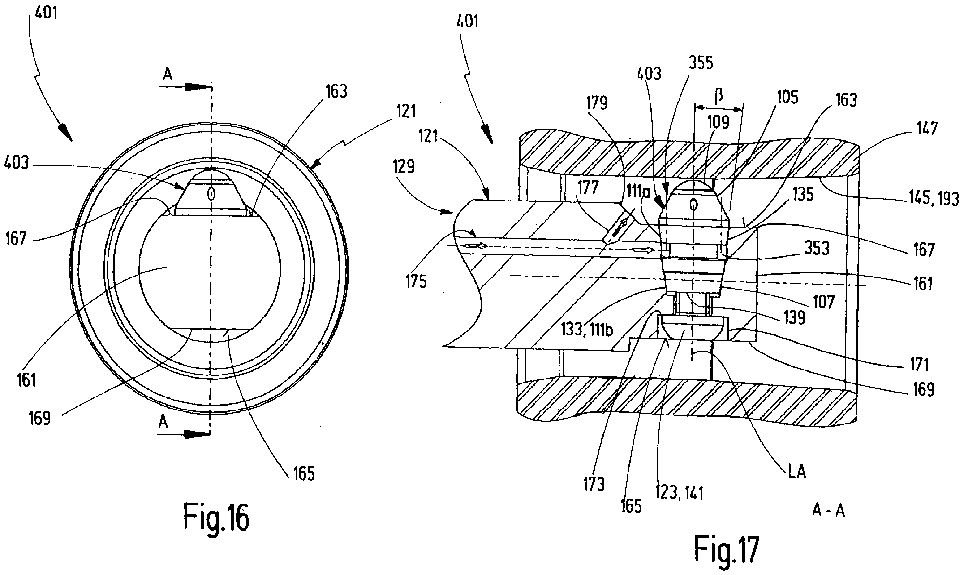

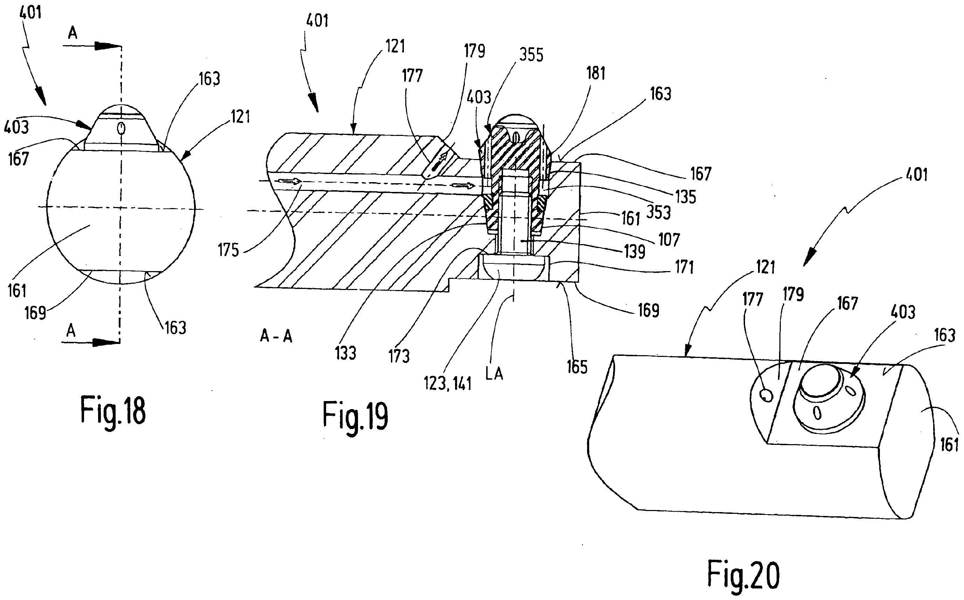

In einer ersten Ausführungsform gemäß der Darstellung nach den Fig. 4 bis 6 weist der Werkzeugträger 103 ein Aufnahmeteil 105 auf, das in ein Schaftteil 107 zum Festlegen des Werkzeugträgers 103 an einem Halter 121 eines Teils 129 einer Bearbeitungsmaschine übergeht (siehe hierzu auch Fig. 17). Das Schaftteil 107 weist einen zylindrischen Abschnitt 131 und eine sich in Umfangsrichtung erstreckende und vom Aufnahmeteil 105 weg gerichtete, konisch verjüngende Anlagefläche 111 auf. Die Anlagefläche 111 ist in der Einbaulage des Schaftteils 107 an einer Haltefläche 133 in einer Ausnehmung 135 des Halters 121 mit diesem in Anlage, wie man aus den Fig. 17 und 19 ersehen kann. Erfindungsgemäß weist die konische Anlagefläche 111 zu einer Längsachse LA des Schaftteils 107 einen halben Öffnungswinkel β auf, der kleiner als 30° ist, vorzugsweise zwischen 7,5° und 15° liegt. Der halbe Öffnungswinkel β ist dabei so groß ausgeführt, dass das Auftreten einer Selbsthemmung vermieden wird, die eine Demontage erschweren oder verhindern könnte. Die konische Anlagefläche 111 ist an einem dem Aufnahmeteil 105 gegenüberliegenden Endbereich 137 des Schaftteils 107 vorgesehen.

In Richtung der Längsachse LA des Schaftteils 107 gesehen weist die Anlagefläche 111 eine Länge L auf, die ca. 90 % der Gesamtlänge GL des Schaftteils 107 in dessen Längsausrichtung gesehen entspricht. In diesem Beispiel weist die Anlagefläche 111 eine Länge L von beispielsweise 10 mm auf.

An dem stirnseitig freien Ende des Schaftteils 107 ist eine Befestigungsstelle 139 für ein Spannmittel 141 zum Festlegen des Werkzeugträgers 103 in der Ausnehmung 135 des Halters 121 vorgesehen. Als Spannmittel 141 wird ein in die freie Stirnseite 143 des Schaftteils 107 eingreifender Schraubbolzen 123 verwendet (Fig. 17). Hierzu ist die Befestigungsstelle 139 als eine koaxial zur Längsachse LA des Schaftteils 107 verlaufende Gewindebohrung 125 mit Innengewinde ausgeführt.

Das Aufnahmeteil 105 ist ebenfalls konisch verjüngt ausgebildet. Dazu weist das Aufnahmeteil 105 vorzugsweise einen größeren halben Öffnungswinkel γ als die Anlagefläche 111 des Schaftteils 107 auf. Diese Form ist für das Glätten der Oberfläche 145 eines Werkstücks 147 (vgl. Fig. 17) und zum Nachschleifen des am Aufnahmeteil 105 befestigten Diamant-Glättwerkzeuges 109 optimal.

Nachfolgend werden weitere Ausführungsformen des erfindungsgemäßen Werkzeugträgers 203, 303, 403, 503, 603, 703 beschrieben. Identische Merkmale sind dabei mit gleichen Bezugszeichen versehen und werden nur noch insofern beschrieben als sie sich wesentlich vom jeweils vorangehenden Ausführungsbeispiel unterscheiden.

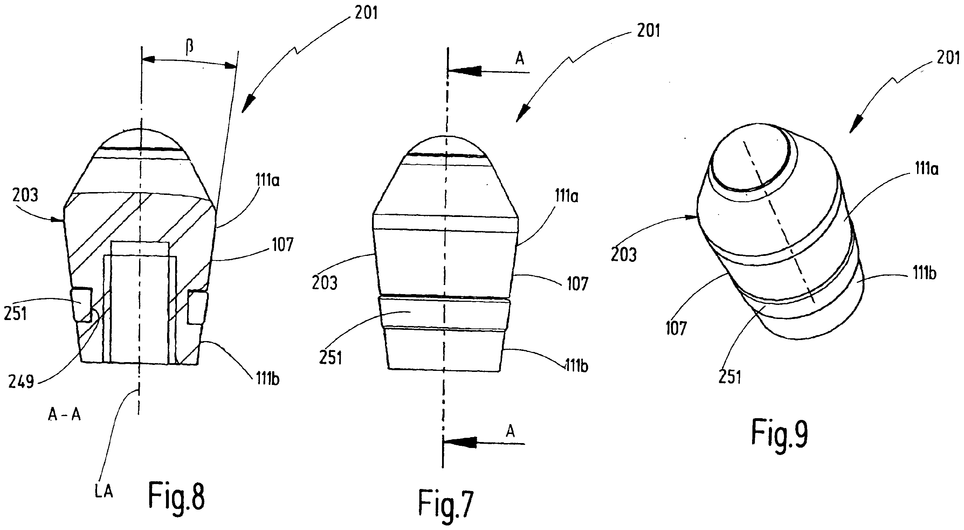

Die zweite Ausführungsform des erfindungsgemäßen Werkzeugträgers 203 gemäß der Darstellung nach den Fig. 7 bis 9 unterscheidet sich von der ersten Ausführungsform dadurch, dass, in der Längsachse LA des Schaftteils 107 gesehen, zwei in Reihe hintereinander angeordnete Anlageflächen 111a, 111b vorgesehen sind. Die beiden Anlageflächen 111a, 111b weisen dabei in Paaranordnung den gleichen halben Öffnungswinkel β zur Längsachse LA des Schaftteils 107 auf und sind zueinander mit ihrem jeweiligen Außenmantel fluchtend ausgebildet. Zwischen den beiden Anlageflächen 111a, 111b ist eine Ringnut 249 vorgesehen, in der eine Dämpfungseinrichtung 251 angeordnet ist. Die Dämpfungseinrichtung 251 ist durch ein ringförmiges Dämpfungselement aus einem elastisch nachgiebigen Elastomer gebildet und bewirkt insbesondere bei Feinstbearbeitungen von Oberflächen 145 (Fig. 17) eine vorteilhafte zusätzliche Schwingungsdämpfung am Werkzeugträger 203.

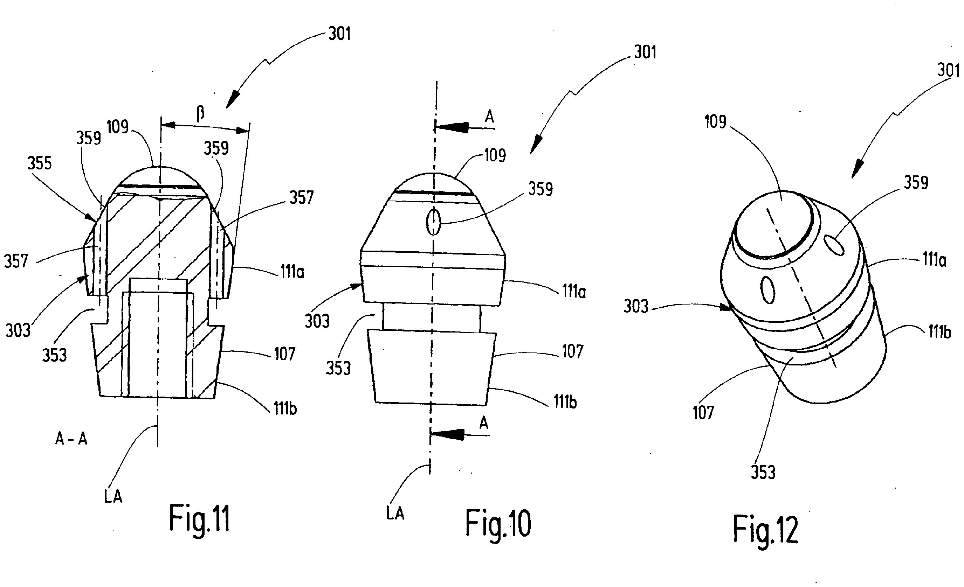

Die dritte Ausführungsform des erfindungsgemäßen Werkzeugträgers 303 gemäß der Darstellung nach den Fig. 10 bis 12 unterscheidet sich von der ersten Ausführungsform ebenfalls dadurch, dass, in der Längsachse LA des Schaftteils 107 gesehen, hintereinander angeordnete Anlageflächen 111a, 111b vorgesehen sind. Die Anlageflächen 111a, 111b weisen wiederum den gleichen halben Öffnungswinkel β zur Längsachse LA des Schaftteils 107 auf und sind zueinander fluchtend ausgebildet. Zwischen zwei Anlageflächen 111a, 111b ist die Ringnut 353 vorgesehen, die Bestandteil einer Kühlschmiermittelführung 355 ist. Außer der Ringnut 353 weist die Kühlschmiermittelführung 355 vier im Werkzeugträger 103 axial verlaufende Kühlkanäle 357 auf. Je zwei Kühlkanäle 357 sind bezogen auf die Längsachse LA des Schaftteils 107 diametral zueinander angeordnet. Die Kühlkanäle 357 gehen jeweils von der Ringnut 353 aus und enden jeweils an einer im Freien endenden Mündung 359 im Aufnahmeteil 105. Die Mündungen 359 der Kühlkanäle 357 sind mithin um das Werkzeug 109 auf einem fiktiven Kreisbogen liegend um 90° versetzt zueinander angeordnet.

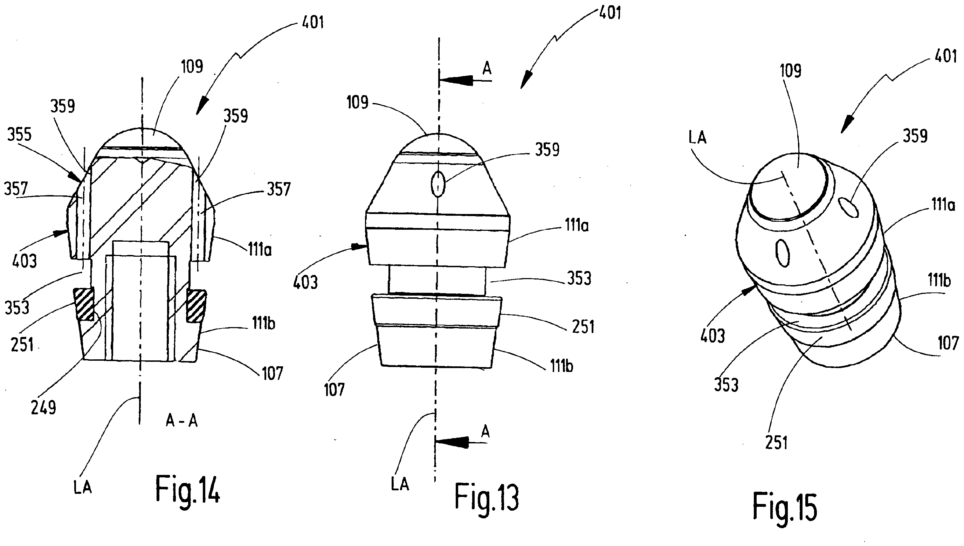

Die vierte Ausführungsform des erfindungsgemäßen Werkzeugträgers 403 gemäß der Darstellung nach den Fig. 13 bis 15 unterscheidet sich von der dritten Ausführungsform im Wesentlichen dadurch, dass analog zur zweiten Ausführungsform eine Ringnut 249 vorgesehen ist, in der die Dämpfungseinrichtung 251 in Form des Dämpfungselements angeordnet ist, dass aber unmittelbar neben der Dämpfungseinrichtung 251 innerhalb der Ringnut 353 die Kühlschmiermittelführung 355 gemäß einer Ausgestaltung nach der dritten Ausführungsform vorgesehen ist. Hierfür ist der Boden respektive der Grund der Ringnut 353 in Längsrichtung des Schaftteils 107 gesehen länger ausgeführt als beim zweiten und dritten Ausführungsbeispiel. Diese Ausgestaltung eines Werkzeugträgers 403 weist somit eine Kombination der vorteilhaften Eigenschaften der zweiten und dritten Ausführungsform auf.

Die Fig. 16 bis 20 zeigen diesen Werkzeugträger 403 der vierten Ausführungsform in einem in den Halter 121 einer nicht näher dargestellten Bearbeitungsmaschine eingesetzten Zustand. Dabei betrifft die Fig. 17 einen Längsschnitt entlang der Linie A-A des in stirnseitiger Ansicht nach der Fig. 16 dargestellten Bearbeitungssystems mit entlang seiner Innenkontur zu glättendem, hohlzylindrisch ausgebildeten Werkstück. Dies gilt auch für die Darstellung nach den Fig. 18 und 19 entsprechend, jedoch ohne Darstellung des zu glättenden Werkstücks. Der Halter 121 ist im Wesentlichen ein rotationssymmetrisch aufgebautes, massives Bauteil, das sich in Richtung auf sein freies Ende 161 zu absatzartig verjüngt. Im Bereich der Ausnehmung 135 für den Werkzeugträger 403 sind am Halter 121 auf einer Oberseite 163 und einer Unterseite 165 (vgl. Fig. 19) jeweils ein Absatz 167 bzw. 169 vorgesehen. Von der Oberseite 163 ausgehend ist in den Halter 121 die sich konisch verjüngende Ausnehmung 135 eingebracht, welche die Haltefläche 133 für den Werkzeugträger 403 bildet. Von der Unterseite 165 her ist koaxial zur Ausnehmung 135 eine weitere Ausnehmung 171 zur Aufnahme des Spannmittels 141 vorgesehen, die einen Absatz 173 aufweist, an dem sich das Spannmittel 141 in Form einer Rundkopfschraube im festgelegten Zustand abstützen kann. Im Halter 121 ist ein zur Ausnehmung 135 führender Kühlkanal 175 vorgesehen, der an der Ringnut 353 der Kühlschmiermittelführung 355 des in den Halter 121 eingesetzten Werkzeugträgers 403 endet. Weiterhin ist ein schräg verlaufender Abzweig 177 des Kühlkanals 175 vorgesehen, der zur Oberseite 163 des Halters 121 führt und an einer schrägen Austrittsfläche 179 endet. Durch den Abzweig 177 kann Kühlschmiermittel direkt zur jeweils zu bearbeitenden Oberfläche 145 des Werkstücks 147 gefördert werden, wie man insbesondere in Fig. 17 sehen kann.

Wie aus den Fig. 17 und 19 weiter ersichtlich, liegt die obere konische Anlagefläche 111a des Werkzeugträgers 403 mit einem geringen Überstand 181 in Richtung des Aufnahmeteils 105 an der zugeordneten Haltefläche 133 des Halters 121 an, wobei der Überstand auch ausschließlich durch den zylindrischen Ringbund 131 gebildet sein kann. Die Anlageflächen 111a, 111b und die ihr jeweils zugeordneten Halteflächen 133 in der Ausnehmung 135 weisen denselben halben Öffnungswinkel β auf und sind paarweise einander im Sinne des Erhalts einer Mehrfachabstützung einander zugeordnet.

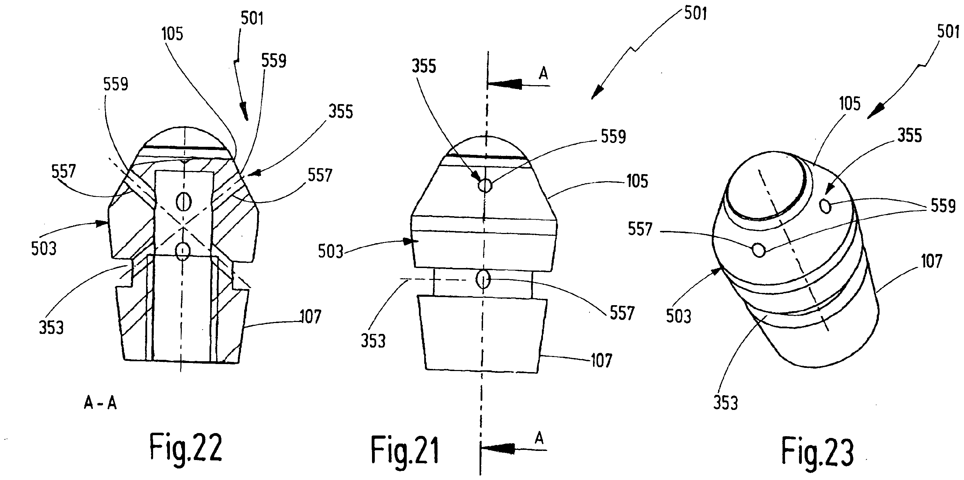

Die fünfte Ausführungsform gemäß der Darstellung nach den Fig. 21 bis 23 des erfindungsgemäßen Werkzeugträgers 503 unterscheidet sich von der dritten Ausführungsform dadurch, dass die von der Ringnut 353 der Kühlschmiermittelführung 355 ausgehenden Kühlkanäle 557 diagonal durch den Werkzeugträger 503 verlaufen und an Mündungen 559 im Aufnahmeteil 105 nach außen hin enden. Dabei kreuzen sich die Kühlkanäle 557 im Werkzeugträger 503.

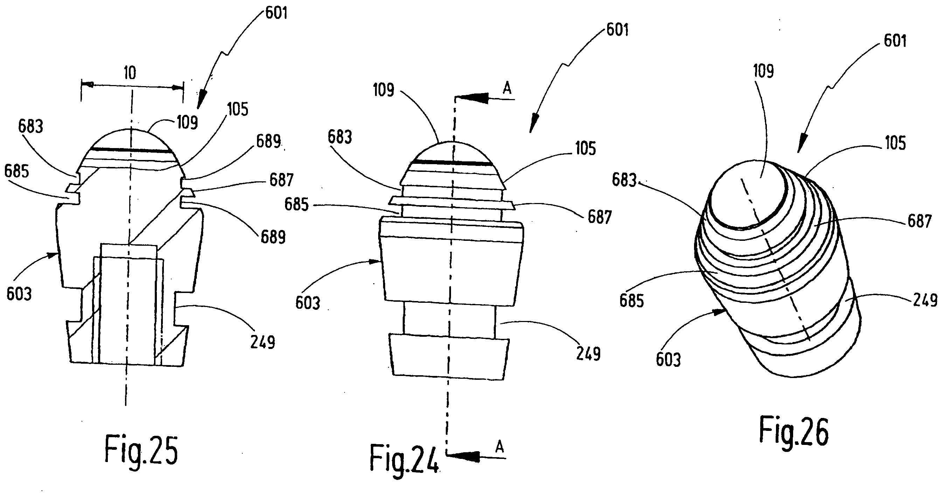

Die sechste Ausführungsform des erfindungsgemäßen Werkzeugträgers 603 gemäß der Darstellung nach den Fig. 24 bis 26 unterscheidet sich von der zweiten Ausführungsform dadurch, dass in das Aufnahmeteil 105 zwei Kühlausnehmungen 683, 685 in Form von beabstandet zueinander angeordneten Ringnuten vorgesehen sind, die zwischen sich eine Kühlrippe 687 ausbilden. Die Ringnuten 683, 685 sind dabei so ausgeführt, dass deren Nutböden 689 jeweils den gleichen Außendurchmesser AD aufweisen. Durch die Kühlausnehmungen 683, 685 sowie die Kühlrippe 687 wird die Oberfläche des Werkzeugträgers 603 im Bereich des Aufnahmeteils 105 vorteilhaft vergrößert, wodurch sich eine passive Kühlung des Diamant-Glättwerkzeuges 109 im Betrieb ergibt.

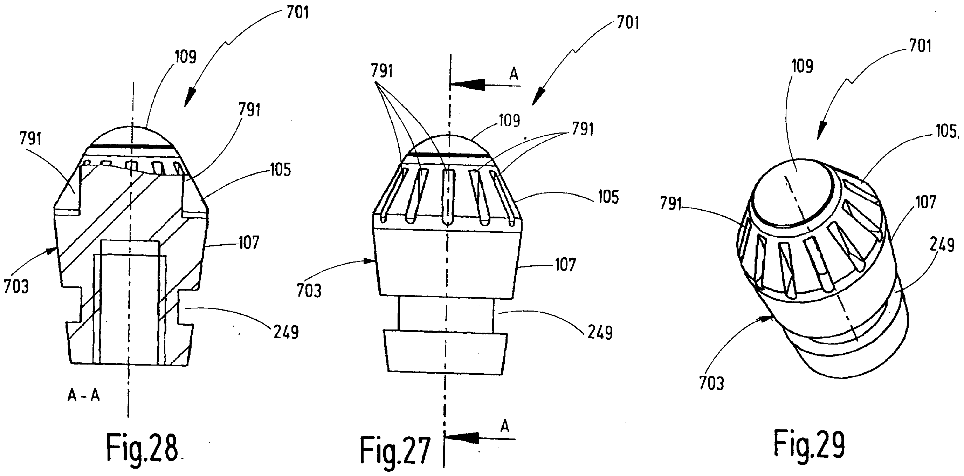

Die siebte Ausführungsform des erfindungsgemäßen Werkzeugträgers 703 gemäß den Darstellungen nach den der Fig. 27 bis 29 unterscheidet sich von der zweiten Ausführungsform dadurch, dass in dem Aufnahmeteil 105 axial verlaufende Kühlausnehmungen 791 vorgesehen sind, die um das Diamant-Glättwerkzeug 109 herum mit gleichem Abstand zueinander angeordnet sind. Aufgrund der konischen Verjüngung des Aufnahmeteils 105 sind die Kühlausnehmungen 791 im Wesentlichen im Querschnitt gesehen dreieckförmig ausgestaltet.

Um den üblichen Betriebszustand zu erreichen, wird ein Werkzeugträger 103, 203, 303, 403, 503, 603, 703 in einen Halter 121 eingesetzt und dort mit dem Spannmittel 141 befestigt. Sodann kann das Werkstück 147 in Rotation versetzt und das Diamant-Werkzeug 109 am Halter 121 gegen dessen Innenkontur 193 oder Außenkontur mit einer vorgebbaren Andrückkraft angelegt werden. Ferner besteht zusätzlich oder alternativ die Möglichkeit, dass das Werkzeug die Bewegung ausführt und zwar überwiegend rotierend, gegebenenfalls auch mit einer zusätzlich überlagerten axialen Bewegung, und dass das Werkstück demgegenüber ruht. Durch das Andrücken wird die Oberfläche 145 des Werkstücks 147 durch Kaltverformen im oberflächennahen Materialbereich eingeebnet. Das Diamant-Glättwerkzeug 109 erreicht dabei beispielhaft eine relative Geschwindigkeit zur Oberfläche 145 von bis zu 100 m/min (= 6 km/h). Um der beim Kontakt von Diamant-Glättwerkzeug 109 und Werkstückoberfläche 145 entstehenden Reibungswärme entgegenzuwirken, wird durch Kühlkanäle 175, 177, 353, 357, 557 im Halter 121 und im Werkzeugträger 103, 203, 303, 403, 503, 603, 703 Kühlschmiermittel zugeführt. Zum Austausch des Diamant-Glättwerkzeuges 109 ist lediglich das Spannmittel 141 aus dem Halter 121 herauszuschrauben und der Werkzeugträger 103, 203, 303, 403, 503, 603, 703 aus der Ausnehmung 135 zu ziehen. Erfindungsgemäß ist das Schaftteil 107 zumindest abschnittsweise kegelstumpfförmig ausgebildet. Hierbei ist der Öffnungswinkel β derart groß gewählt, dass keine Selbsthemmung auftritt und somit die Demontierbarkeit auch in einem, etwaigen Schadensfall voll gewährleistet bleibt.

Durch die erfindungsgemäße Lösung ist die wirksame Anlagefläche des Werkzeugträgers 103, 203, 303, 403, 503, 603, 703 am Halter 121 vergrößert, so dass sich die Vorteile einer sehr guten Lageorientierung des Werkzeugträgers 103, 203, 303, 403, 503, 603, 703 bei einer stark verbesserten Stabilität der Verbindung zwischen Werkzeugträger 103, 203, 303, 403, 503, 603, 703 und Halter 121 bei einer verminderten Schwingungsneigung des Werkzeugträgers 103, 203, 303, 403, 503, 603, 703 ergeben.

Die Gefahr einer Beschädigung der jeweiligen Anlagefläche 111, 111a, 111b ist wegen deren durch den Halter geschützten Aufnahme gering. Weiter gibt es einen stark verbesserten Wärmeübergang zwischen dem Werkzeugträger 103, 203, 303, 403, 503, 603, 703 und dem Halter 121. Darüber hinaus ist die Möglichkeit zum Nachschleifen des Diamant-Glättwerkzeuges 109 verbessert, da eine größere Kontaktfläche zur Verfügung steht und das Nachschleifen die Anlagefläche 111, 111a, 111b nicht zwangsläufig verkleinert. Schließlich ist ein vereinfachter Wechsel des Werkzeugträgers 103, 203, 303, 403, 503, 603, 703 auch bei beengten Einbauverhältnissen direkt an der Bearbeitungsmaschine erreicht. Dies hat so keine Entsprechung im Stand der Technik.

Durch die Unteransprüche und die Beschreibung wird die Erfindung beispielhaft erläutert. Der Gegenstand der Erfindung wird durch die nachfolgenden Ansprüche definiert.

## Patentansprüche

1. Werkzeugsystem umfassend einen Halter (121) und mindestens einen Werkzeugträger (103, 203, 303, 403, 503, 603, 703) zur Aufnahme eines Werkzeuges (109), insbesondere in Form eines Diamant-Glättwerkzeuges, der ein Aufnahmeteil (105) aufweist, das zum Festlegen des Werkzeugträgers (103, 203, 303, 403, 503, 603, 703) an dem Halter (121) einer Bearbeitungsmaschine in ein Schaftteil (107) übergeht, das zumindest eine sich mindestens abschnittsweise in Umfangsrichtung (UR) erstreckende Anlagefläche (111, 111a, 111b) aufweist, die sich in Richtung des freien Endes des Schaftteiles (107) konisch verjüngt und die in der Einbaulage des Schaftteils (107) im Halter (121) mit einer Haltefläche (133) in einer Ausnehmung (135) desselben in Anlage ist, wobei an dem stirnseitig freien Ende des Schaftteils (107) eine Befestigungsstelle (139) für ein Spannmittel (141) zum Festlegen des Werkzeugträgers (103) in der Ausnehmung (135) des Halters (121) vorgesehen ist, **dadurch gekennzeichnet, dass** die jeweilige konische Anlagefläche (111, 111a, 111b) respektive deren fiktive Verlängerung zu einer Längsachse (LA) des Schaftteiles (107) einen halben Öffnungswinkel (β) aufweist, der kleiner als 30° ist, vorzugsweise zwischen 7,5° und 15° liegt, und dass die konische Anlagefläche (111, 111a, 111b) des Werkzeugträgers (103, 203, 303, 403, 503, 603, 703) mit einem geringen Überstand (181) in Richtung des Aufnahmeteils (105) an der Haltefläche (133) des Halters (121) an liegt.

2. Werkzeugsystem nach Anspruch 1, **dadurch gekennzeichnet, dass** die Anlagefläche (111, 111a, 111b) und die ihr zugeordnete Haltefläche (133) in der Ausnehmung (135) denselben halben Öffnungswinkel (β) aufweisen.

3. Werkzeugsystem nach Anspruch 1 oder 2, **dadurch gekennzeichnet, dass** in der Längsachse (LA) des Schaftteiles (107) gesehen mehrere nebeneinander angeordnete Anlageflächen (111a, 111b) vorgesehen sind.

4. Werkzeugsystem nach Anspruch 3, **dadurch gekennzeichnet, dass** die nebeneinander angeordneten Anlageflächen (111a, 111b) den gleichen halben Öffnungswinkel (β) zur Längsachse (LA) des Schaftteils (107) aufweisen und vorzugsweise zueinander fluchtend ausgebildet sind.

5. Werkzeugsystem nach einem der vorstehenden Ansprüche, **dadurch gekennzeichnet, dass** in Richtung der Längsachse (LA) des Schaftteiles (107) gesehen die zumindest eine Anlagefläche (111, 111a, 111b) eine Länge (L) aufweist, die mindestens 20 % der Gesamtlänge (GL) des Schaftteils (107) entspricht.

6. Werkzeugsystem nach einem der vorstehenden Ansprüche, **dadurch gekennzeichnet, dass** im Werkzeugträger (303, 403, 503) eine Kühlschmiermittelführung (355) vorgesehen ist, die vorzugsweise durch zumindest einen, insbesondere radial, axial oder diagonal, im oder am Werkzeugträger (303, 403, 503) verlaufenden Kühlkanal (353, 357, 557) gebildet ist, der bevorzugt an einer Mündung (359, 559) im Aufnahmeteil (105) endet, und dass bei mehreren Kühlkanälen (357, 557) deren Mündungen (359, 559) um das Werkzeug (109) versetzt zueinander angeordnet sind.

7. Werkzeugsystem nach einem der Ansprüche 2 bis 6, **dadurch gekennzeichnet, dass** zwischen zwei Anlageflächen (111a, 111b) eine Ringnut (249, 353) vorgesehen ist, in der eine Dämpfungseinrichtung (251) angeordnet ist und/oder die Bestandteil der Kühlschmiermittelführung (355) ist.

8. Werkzeugsystem nach Anspruch 7, **dadurch gekennzeichnet, dass** die Dämpfungseinrichtung (251) durch ein ringförmiges Dämpfungselement, insbesondere aus einem Elastomer, gebildet ist.

9. Werkzeugsystem nach einem der vorstehenden Ansprüche, **dadurch gekennzeichnet, dass** das Spannmittel (141) ein in eine Stirnseite (143) des Schaftteils (107) eingreifender Schraubbolzen (123) oder ein mit einem Außengewinde versehener Ring ist, der am Aufnahmeteil (105) anliegt und in den Halter (121) eingeschraubt ist.

10. Werkzeugsystem nach einem der vorstehenden Ansprüche, **dadurch gekennzeichnet, dass** das Aufnahmeteil (105) konisch verjüngt ausgebildet ist und dass das Aufnahmeteil (105) vorzugsweise einen größeren halben Öffnungswinkel (γ) als die Anlagefläche (111, 111a, 111b) des Schaftteils (107) aufweist.

11. Werkzeugsystem nach einem der vorstehenden Ansprüche, **dadurch gekennzeichnet, dass** das Aufnahmeteil (105), insbesondere in einem aus dem Halter (121) vorragenden Abschnitt, eine Kühlrippe (687) oder eine Kühlausnehmung (683, 685, 791) aufweist.

## Claims

1. A tool system comprising a holder (121) and at least one tool support (103, 203, 303, 403, 503, 603, 703) for receiving a tool (109), in particular in the form of a diamond polishing tool, which has a receiving part (105) which transitions into a shaft part (107) in order to fix the tool support (103, 203, 303, 403, 503, 603, 703) to the holder (121) of a machining unit, which shaft part has at least one bearing surface (111, 111a, 111b) extending at least along some sections in circumferential direction (UR), which bearing surface tapers conically in the direction of the free end of the shaft part (107) and is in contact with a holding surface (133) in a recess (135) of the holder (121) when the shaft part (107) is in the installed position in said holder (121), wherein a point of attachment (139) for a tensioning means (141) for fixing the tool support (103) in the recess (135) of the holder (121) is provided at the free end face of the shaft part (107), **characterised in that** each conical bearing surface (111, 111a, 111b) has a half opening angle (β) which is less than 30°, preferably between 7.5° and 15°, with respect to the imaginary extension of the bearing surface relative to a longitudinal axis (LA) of the shaft part (107), and that the conical bearing surface (111, 111a, 111b) of the tool support (103, 203, 303, 403, 503, 603, 703) abuts against the holding surface (133) of the holder (121) with a small protrusion (181) in the direction of the receiving part (105).

2. The tool system according to claim 1, **characterised in that** the bearing surface (111, 111a, 111b) and the holding surface (133) assigned thereto in the recess (135) have the same half opening angle (β).

3. The tool system according to claim 1 or 2, **characterised in that**, viewed in the longitudinal axis (LA) of the shaft part (107), a plurality of bearing surfaces (111a, 111b) arranged adjacent to one another are provided.

4. The tool system according to claim 3, **characterised in that** the bearing surfaces (111a, 111b) arranged adjacent to one another have the same half opening angle (β) with respect to the longitudinal axis (LA) of the shaft part (107) and are designed preferably flush to one another.

5. The tool system according to one of the preceding claims, **characterised in that**, viewed in the direction of the longitudinal axis (LA) of the shaft part (107), the at least one bearing surface (111, 111a, 111b) has a length (L) which corresponds to at least 20 % of the overall length (GL) of the shaft part (107).

6. The tool system according to one of the preceding claims, **characterised in that** a cooling lubricant channel (355), which is formed preferably by at least one coolant duct (353, 357, 557) running in particular radially, axially or diagonally, in or at the tool support (303, 403, 503), is provided in the tool support (303, 403, 503), which duct ends preferably at an opening (359, 559) in the receiving part (105), and that with a plurality of cooling ducts (357, 557), their openings (359, 559) are arranged offset to one another about the tool (109).

7. The tool system according to one of claims 2 to 6, **characterised in that** an annular groove (249, 353) is provided between two bearing surfaces (111a, 111b), in which groove a damper (251) is arranged and/or is a component of the cooling lubricant channel (355).

8. The tool system according to claim 7, **characterised in that** the damper (251) is formed by an annular damping element, in particular an elastomer.

9. The tool system according to one of the preceding claims, **characterised in that** the tensioning means (141) is a stud bolt (123) engaging in an end face (143) of the shaft part (107) or a ring provided with an external thread, which ring abuts against the receiving part (105) and is screwed into the holder (121).

10. The tool system according to one of the preceding claims, **characterised in that** the receiving part (105) is designed to be tapered in conical manner and that the receiving part (105) preferably has a greater half opening angle (γ) than the bearing surface (111, 111a, 111b) of the shaft part (107).

11. The tool system according to one of the preceding claims, **characterised in that** the receiving part (105) has a cooling rib (687) or a cooling recess (683, 685, 791), in particular in a section projecting out from the holder (121).

## Revendications

1. Système d'outils comprenant un support (21) et au moins un porte-outils (103, 203, 303, 403, 503, 603, 703) de réception d'un outil (109), notamment sous la forme d'un outil de polissage en diamant, qui a une partie (105) de réception, laquelle, pour fixer le porte-outils (103, 203, 303, 403, 503, 603, 703) au support (121) d'une machine d'usinage, se transforme en une partie (107) de fût, qui a au moins une surface (111, 111a, 111b), qui s'étend au moins par endroit dans la direction (UR) de pourtour, qui se rétrécit coniquement dans la direction de l'extrémité libre de la partie (107) de fût et qui, dans la position de montage de la partie (107) de fût dans le support (121), est en contact avec une surface (133) de maintien dans un évidement (135) de celui-ci, dans lequel, à l'extrémité libre du côté frontal de la partie (107) de fût, est prévu un point (139) de fixation d'un moyen (141) de serrage pour fixer le porte-outils (103) dans l'évidement (135) du support (121), **caractérisé en ce que** la surface (111, 111a, 111b) de contact conique, respectivement son prolongement fictif, fait avec un axe (LA) longitudinal de la partie (107) de fût un demi angle (β) au sommet, qui est plus petit que 30°, en étant de préférence compris entre 7,5° et 15°, et **en ce que** la surface (111, 111a, 111b) de contact conique du porte-outils (103, 203, 303, 403, 503, 603, 703) s'applique, avec une petite saillie (181) dans la direction de la partie (105) de réception, à la surface (133) de support du support (121).

2. Système d'outils suivant la revendication 1, **caractérisé en ce que** la surface (111, 111a, 111b) de contact et la surface (133) de maintien, qui lui est associée dans l'évidement (135) ont le même demi angle (β) au sommet.

3. Système d'outils suivant la revendication 1 ou 2, **caractérisé en ce que**, considéré suivant l'axe (LA) longitudinal de la partie (107) de fût, il est prévu plusieurs surfaces (111a, 111b) de contact disposées les unes à côté des autres.

4. Système d'outils suivant la revendication 3, **caractérisé en ce que** les surfaces (111a, 111b) de contact, disposées les unes à côté des autres, font le même demi angle (β) au sommet avec l'axe (LA) longitudinal de la partie (107) de fût et sont constituées en étant, de préférence, à affleurement les unes avec les autres.

5. Système d'outils suivant l'une des revendications précédentes, **caractérisé en ce que**, considérée dans la direction de l'axe (LA) longitudinal de la partie (107) de fût, la au moins une surface (111, 111a, 111b) de contact a une longueur (L), qui correspond à au moins 20% de la longueur (GL) totale de la partie (107) de fût.

6. Système d'outils suivant l'une des revendications précédentes, **caractérisé en ce qu'**il est prévu dans le porte-outils (303, 403, 503) une conduite (355) de fluide lubrifiant de refroidissement, qui est formée, de préférence, d'au moins un canal (353, 357, 557) de refroidissement s'étendant, notamment radialement, axialement ou en diagonale, dans ou sur le porte-outils (303, 403, 503), canal qui se termine, de préférence, à une embouchure (359, 559) dans la partie (105) de réception et **en ce que**, s'il y a plusieurs canaux (357, 557) de refroidissement, leurs embouchures (359, 559) sont disposées de manière décalées les unes par rapport aux autres autour de l'outil (109).

7. Système d'outils suivant l'une des revendications 2 à 6, **caractérisé en ce qu'**il est prévu, entre deux surfaces (111a, 111b) de contact, une rainure (249, 353) annulaire, dans laquelle est disposé un dispositif d'amortissement et/ou qui fait partie de la conduite (355) de fluide lubrifiant de refroidissement.

8. Système d'outils suivant la revendication 7, **caractérisé en ce que** le dispositif (251) d'amortissement est formé d'un élément (251) d'amortissement annulaire, notamment en un élastomère.

9. Système d'outils suivant l'une des revendications précédentes, **caractérisé en ce que** le moyen (141) de serrage est un boulon (123) fileté, pénétrant dans un côté (143) frontal de la partie (107) de fût, ou est un anneau pourvu d'un filetage extérieur, qui s'applique à la partie (105) de réception et se visse dans le support (121).

10. Système d'outils suivant l'une des revendications précédentes, **caractérisé en ce que** la partie (105) de réception se rétrécit coniquement et **en ce que** la partie (105) de réception a, de préférence, un demi angle (y) au sommet plus grand que la surface (111, 111a, 111b) de contact de la partie (107) de fût.

11. Système d'outils suivant l'une des revendications précédentes, **caractérisé en ce que** la partie (105) de réception a, notamment dans un segment en saillie du support (121), une ailette (687) de refroidissement ou un évidement (683, 685, 791) de refroidissement.
